# EUROPEAN PATENT SPECIFICATION

(11) **EP 2 632 280 B1**
(45) Date of publication and mention of the grant of the patent: **01.04.2020**
(21) Application number: 11836758.0
(22) Date of filing: 21.10.2011
(51) Int. Cl.: A23K 10/22, A23K 10/20, A23L 33/135, A23L 33/17, A23L 17/00, A23J 3/22

(54) **FABRICATED FISH CHUNKS**
INDUSTRIELL GEFERTIGTE FISCHSTÜCKE
MORCEAUX DE POISSONS FAÇONNÉS

(30) Priority: 24.06.2011 US 201161571314 P; 27.10.2010 US 455819 P
(43) Date of publication of application: 04.09.2013
(73) Proprietor: Société des Produits Nestlé S.A., 1800 Vevey (CH)
(72) Inventor: JOHNSON, Bradley, St. Louis, MO 63102 (US); LECOUTEUX, Claude, St. Louis, MO 63102 (US); ROUSSEL, Laurence, St. Louis, MO 63102 (US); SAYLOCK, Michael, John, Kansas City, MO 64151 (US); SHI, Zulin, St. Louis, MO 63102 (US)
(74) Representative: Rupp, Christian
(86) International application number: PCT/US2011/001797
(87) International publication number: WO 2012/057826

(56) References cited:
- EP-A1- 0 412 188
- EP-A2- 0 396 487
- WO-A1-93/20719
- WO-A1-2009/114077
- WO-A1-2010/126563
- JP-A- H0 242 957
- JP-A- S59 220 170
- US-A- 4 579 741
- US-A- 5 198 261
- US-A1- 2010 233 347
- US-A1- 2010 233 347
- US-B1- 6 387 439
- Eleanor Noss Witney ET AL: "Table H-1 food composition" In: "Understanding Nutrition 9th Edition", 1 January 2002 (2002-01-01), XP055268228, pages H-32,
- Anonymous: "Pork - Wikipedia", , 14 June 2011 (2011-06-14), XP055396030, Retrieved from the Internet: URL:https://en.wikipedia.org/w/index.php?t itle=Pork&oldid=434321242#Nutrition [retrieved on 2017-08-03]
- Webb Foodlabs: "Surimi Properties, Functionality & Nutrition" In: "Functional Properties of Alaska Pollock Surirni for Applications in the Food Industry", 1 January 1985 (1985-01-01), AFDF, XP055645774, pages 1-21,
- DATABASE GNPD [Online] MINTEL; 3 November 2009 (2009-11-03), anonymous: "Salmon Bleu Grain-Free Cat Food", XP055645525, retrieved from www.gnpd.com Database accession no. 1188132
- DATABASE GNPD [Online] MINTEL; 17 September 2004 (2004-09-17), anonymous: "Cat Food Extension", XP055645534, retrieved from www.gnpd.com Database accession no. 10188036

## Description

### BACKGROUND OF THE INVENTION

### Field of the Invention

The invention relates generally to fabricated foods and particularly to methods for making fabricated fish chunks having the appearance and texture of real fish.

### Description of Related Art

Methods for making fabricated foods are known in the food industry. Typically, to reduce the cost of certain food products, often by replacing all or a portion of real meat with meat substitutes, there has been a demand for fabricated meat that resemble chunks or pieces of real meat in appearance, texture, and physical structure. Such products are used as a partial or complete replacement for more expensive real meat chunks in food products such as stews, pot pies, casseroles, canned foods, and pet foods. Chunky meat products are highly desirable in human and pet foods, both for aesthetic quality and consumer appeal. These chunky products provide a more economical product that attempts to simulate real meat chunks in shape, appearance, and texture.

Early efforts to develop fabricated meat include producing such fabricated meat from vegetable protein and/or meat sources using extrusion-expansion techniques or other conventional means. These products are in the form of a uniform, homogeneous mass, but lack the structure, texture, and appearance of real meat chunks. Therefore, these products are not suitable for use in applications in which the use of simulated meat chunks is desired. Later efforts were somewhat more successful. An improvement in fabricated meat is disclosed in US4781939. This patent discloses processing a meat emulsion under conditions that produce a layered, non-expanded product in the form of chunks or pieces that, simulate real meat chunks in texture, appearance, and consistency. The product is in the form of distinct chunks or pieces having a plurality of juxtaposed, manually separable meat-like layers resembling a fibrous chunk of real meat in appearance, texture, and consistency. A further improvement in fabricated meat fibrous appearance and texture is described in US6379738. The meat emulsion chunks are suitable for use as a partial or complete replacement for more expensive natural meat chunks in both human and animal foods. They retain their integrity and shape when subjected to commercial canning and sterilization procedures such as those required in the production of canned, high moisture food products, including pet food products. However, while these methods produced somewhat acceptable fabricated meat that had the fibrous appearance of pork, beef, and the like, the methods failed to provide fabricated fish with an acceptable appearance and texture that mimicked real fish.

Fabricated fish and methods for making fabricated fish are described in PCT/US2010/00111. This fabricated fish has a realistic flaked fish-like appearance and texture however the fish-like texture is not apparent when larger chunks are examined.

Moreover, WO 2010/126563 A1 discloses flaked fish analogs and methods for making such analogs. EP 0 396 487 A2 discloses a process for the manufacture of a product analogous to elver and a product thus obtained. WO 93/20719 A1 discloses a method for preparing a product analogous to an anchovy fillet and a product thus obtained. EP 0 412 188 A1 discloses simulated fish meat and a method of producing the same. US 6,387,439 B1 discloses a baby eel substitute and a method of fabrication thereof. WO 2009/114077 A1 discloses food products and methods of making food products. US 5,198,261 A discloses a method of manufacturing a fibrous fish or shellfish product. JP S59 220170 A discloses a preparation of an instant product of dried fish meat paste. JP H02 42957 A discloses a fish meat fillet-like food and its manufacturing method. US 2010/233347 A1 discloses food compositions having a realistic meat-like appearance, feel, and texture.

Unfortunately, known methods for producing fabricated fish result in products that do not have a realistic fish-like appearance or texture, or only have a realistic appearance when presented in smaller pieces. There is, therefore a need for a new fabricated fish chunk and methods for making fabricated fish chunks that truly imitate cooked fish filets and large chunks of cooked fish.

### SUMMARY OF THE INVENTION

It is, therefore, an object of the invention to provide methods for making fabricated fish chunks having the appearance and texture of real fish.

This object is achieved by the method for making dried fabricated fish chunks as specified by claim 1. Preferred embodiments of the method of the invention are specified by the dependent claims.

Other and further objects, features, and advantages of the invention will be readily apparent to those skilled in the art.

### DETAILED DESCRIPTION OF THE INVENTION

### Definitions

The term "fabricated fish chunk" means a fabricated food composition having the appearance and texture of real fish chunks.

The term "functional protein" means a protein that affects the structure and/or appearance of a product when included as an ingredient in the product.

The term "surimi" means a fish-based food product obtained from deboned fish flesh which has been washed repeatedly then decanted, producing a concentrated stabilized source of myofibrillar proteins in the form of a paste, to which cryoprotectants are added prior to freezing. Various quality grades (A, AA, AAA, FA, KA, SA, RA, KB, etc.) of surimi can be used to produce fabricated fish chunks. Quality grades are determined by; (1) color/whiteness (brightness), which is directly related to the amount of washing, and (2) gel strength. The higher the quality grade, the higher the whiteness value (more washing), and the higher the gel strength measurement due to myofibillar protein concentration.

The term "animal" means any animal that could benefit from or enjoy the consumption of the fabricated fish chunks made according to the method of the present invention, including various human, avian, bovine, canine, equine, feline, murine, ovine, or porcine animals.

The term "companion animal" means domesticated animals such as birds, cats, dogs, ferrets, hamsters, mice, gerbils, horses, cows, goats, sheep, donkeys, pigs, and the like.

The term "single package" means that the components of a kit are physically associated in or with one or more containers and considered a unit for manufacture, distribution, sale, or use. Containers include, but are not limited to, bags, boxes, cartons, bottles, packages of any type or design or material, over-wrap, shrink-wrap, affixed components (e.g., stapled, adhered, or the like), or combinations thereof. A single package may be containers of individual food compositions physically associated such that they are considered a unit for manufacture, distribution, sale, or use.

The term "virtual package" means that the components of a kit are associated by directions on one or more physical or virtual kit components instructing the user how to obtain the other components, e.g., in a bag or other container containing one component and directions instructing the user to go to a website, contact a recorded message or a fax-back service, view a visual message, or contact a caregiver or instructor to obtain instructions on how to use the kit or safety or technical information about one or more components of a kit.

All percentages expressed herein are by weight of the composition on an as is basis unless specifically stated otherwise. The skilled artisan will understand that the term "as is basis" means that an ingredient's concentration or percentage in a composition is measured or determined on a weight to weight basis.

As used throughout, ranges are used herein in shorthand, so as to avoid having to set out at length and describe each and every value within the range. Any appropriate value within the range can be selected, where appropriate, as the upper value, lower value, or the terminus of the range.

As used herein and in the appended claims, the singular form of a word includes the plural, and vice versa, unless the context clearly dictates otherwise. Thus, the references "a", "an", and "the" are generally inclusive of the plurals of the respective terms. For example, reference to "an animal, "a method", or "dietary supplement" includes a plurality of such "animals", "methods", or "dietary supplements". Similarly, the words "comprise", "comprises", and "comprising" are to be interpreted inclusively rather than exclusively. Likewise the terms "include", "including" and "or" should all be construed to be inclusive, unless such a construction is clearly prohibited from the context. Where used herein the term "examples," particularly when followed by a listing of terms is merely exemplary and illustrative, and should not be deemed to be exclusive or comprehensive.

The methods and compositions and other advances disclosed here are not limited to particular methodology, protocols, and reagents described herein because, as the skilled artisan will appreciate, they may vary. Further, the terminology used herein is for the purpose of describing particular embodiments only, and is not intended to, and does not, limit the scope of that which is disclosed or claimed.

Unless defined otherwise, all technical and scientific terms, terms of art, and acronyms used herein have the meanings commonly understood by one of ordinary skill in the art in the field(s) of the invention, or in the field(s) where the term is used. Although any compositions, methods, articles of manufacture, or other means or materials similar or equivalent to those described herein can be used in the practice of the invention, the preferred compositions, methods, articles of manufacture, or other means or materials are described herein.

### The Invention

The method for making dried fabricated fish chunks of the invention produces fabricated fish chunks having the appearance and texture of real fish, which are dried in the final method step. The fabricated fish chunks comprise from 75 to 95% of a mixture of surimi and one or more functional proteins and from 5 to 25% other comestible ingredients, wherein the mixture of surimi and functional proteins comprises from 50 to 100% surimi and from 0 to 50% of one or more non-surimi functional proteins. The fish chunks have a smooth laminar appearance and a flaky texture similar to chunks of real fish.

The fabricated fish chunks comprise from 75 to 95% of the mixture of surimi and one or more functional proteins, preferably from about 80 to about 95%, more preferably from about 85 to about 95%; and from 5 to 25% other comestible ingredients, preferably from about 5 to about 20%, more preferably from about 5 to about 15%; wherein the mixture of surimi and functional proteins comprises from 50 to 100% surimi, preferably from about 70 to about 100%, more preferably from about 90 to about 100%; and from 0 to 50% of one or more non-surimi functional proteins, preferably from about 0 to about 30%, more preferably from about 0 to about 10%. In some preferred embodiments the fabricated fish chunks comprise from about 2 to about 10% of one or more non-surimi functional proteins, more preferably from about 3 to about 7%.

Methods and fish useful for making surimi are known to skilled artisans. Almost any type of comestible fish can be used to make surimi. In some embodiments, the types of fish used to make surimi are one or more selected from Alaska Pollock, Bigeyes, Big-head Pennah Croaker, Cod, Golden Threadfin Bream, Milkfish, North Pacific Hake, Arrowtooth Flounder, Swordfish, Tilapia, and various shark species. In a preferred embodiment, the types of fish used to make surimi are one or more selected from Alaska Pollock, North Pacific Hake and Arrowtooth Flounder.

A functional protein that is capable of producing a gel and that is compatible with surimi is used to produce the fabricated fish chunks. In the method of the invention, the functional protein is selected from egg white protein, milk protein concentrate, wheat gluten, soy isolate protein, non-surimi fish protein, and other types of white or light colored meat protein, and combinations thereof. In a preferred embodiment, the functional protein is wheat gluten, soy isolate, or combinations thereof.

In some embodiments, the non-surimi fish protein is one or more selected from salmon, tuna, white fish, mackerel, snapper, grouper, herring, and catfish. In a preferred embodiment, the non-surimi fish protein is one or more selected from salmon and tuna.

In various embodiments, the fabricated fish chunks comprise from about 1 to about 15% non-surimi fish protein, preferably from about 2 to about 10%, more preferably from about 3 to about 6%.

In some embodiments, the other types of white or light colored meat protein is selected from chicken, turkey, pork, rabbit, and combinations thereof. In a preferred embodiment, the other types of white or light colored meat protein is one or more selected from chicken and turkey.

In various embodiments, the fabricated fish chunks comprise from about 1 to about 30% other types of white or light colored meat protein, preferably from about 5 to about 25%, and more preferably from about 8 to about 20%. Any such meat protein compatible with the surimi, functional proteins, and optional non-surimi fish protein can be used. Preferably, the white or light colored meat protein is turkey or chicken, more preferably chicken.

In various embodiments, the fabricated fish chunks comprise combinations of non-surimi fish protein and other types of white or light colored meat protein. The combination generally comprise from about 10 to about 90% non-surimi fish protein and from about 90 to about 10% white or light colored meat protein.

The fabricated fish chunks comprise other comestible ingredients. In the method of the invention, the fabricated fish chunks comprise from 5 to 25% other comestible ingredients, preferably from about 5 to about 20%, more preferably from about 5 to about 15%. The other comestible ingredients are materials compatible with the surimi and functional proteins and capable of forming the fabricated fish chunks. Preferably the other comestible ingredients are animal, plant or vegetable matter. In the method of the invention, the other comestible ingredients are fiber, fat, carbohydrate, meal, or combinations thereof.

Any fiber that is compatible with the surimi and functional proteins and capable of forming the fabricated fish chunks can be used. In some embodiments the fiber is wheat bran, corn bran, rice bran, oat bran, fruit/citrus pulp, beet pulp, inulin, carboxymethyl cellulose and gums such as guar, xanthan, carrageenan, locust bean, etc., or combinations thereof.

Any fat that is compatible with the surimi and functional proteins and capable of forming the fabricated fish chunks can be used. In some embodiments the fat is one or more polyunsaturated fatty acids such as omega-3 fatty acids and omega-6 fatty acids. In one embodiment the fat is fish oil, preferably deodorized fish oil.

Any carbohydrate that is compatible with the surimi and functional proteins and capable of forming the fabricated fish chunks can be used. In some embodiments the carbohydrate is a combination of simple sugars (glucose, fructose, sucrose, lactose, etc.) with other carbohydrate sources (cereal flours, wheat, com, rice, etc.). In some embodiments the carbohydrate is maltodextrin or polydextrose.

Any meal that is compatible with the surimi and functional proteins and capable of forming the fabricated fish chunks can be used. In some embodiments the meal is fish meal, poultry meal or any meal made from a mammal. In some embodiments the meal is made from salmon, tuna, whitefish, or combinations thereof. In some embodiments, fish protein hydrolysate may also be used.

In various embodiments, the fabricated fish chunks comprise from about 1 to about 10% fat, preferably from about 2 to about 8%, more preferably from about 3 to about 7%.

In various embodiments, the fabricated fish chunks further comprise cellulose. In some embodiments, the fabricated fish chunks comprise from about 1 to about 15% cellulose, preferably from about 2 to about 10%, more preferably from about 3 to about 7%.

In various embodiments, the fabricated fish chunks further comprise added water to obtain optimal moisture content. In some embodiments, the fabricated fish chunks comprise from about 1 to about 20% added water, preferably from about 5 to about 15%, more preferably from about 6 to about 10%.

In some embodiments the fabricated fish chunks have a moisture content from about 60 to about 70%, preferably from about 62 to about 68%, more preferably, from about 64 to about 66%.

In one embodiment, the fabricated fish chunks comprise from 75 to 95% of the mixture of surimi and one or more functional proteins, from about 2 to about 10% fat, and from about 1 to about 5% cellulose, wherein the mixture of surimi and functional proteins comprises from 50 to 100% surimi and from 0 to 50% of one or more non-surimi functional proteins.

In another embodiment, the fabricated fish chunks comprise from about 80 to 95% of the mixture of surimi and one or more functional proteins, from about 3 to about 10% fat, and from about 2 to about 10% cellulose, wherein the mixture of surimi and functional proteins comprises from about 90 to about 100% surimi and from about 0 to about 10% of one or more non-surimi functional proteins.

In another embodiment, the fabricated fish chunks comprise from about 80 to about 88% of the mixture of surimi and one or more functional proteins, from about 2 to about 5% fat, and from about 10 to about 15% added water, wherein the mixture of surimi and functional proteins comprises from 50 to about 70% surimi and from about 30 to 50% of one or more non-surimi functional proteins.

In another embodiment, the fabricated fish chunks comprise from about 84 to about 93% of the mixture of surimi and one or more functional proteins, from about 2 to about 6% fat and from about 5 to about 8% added water, wherein the mixture of surimi and functional proteins comprises from about 70 to about 90% surimi and from about 10 to about 30% of one or more non-surimi functional proteins.

As product, the method of the invention provides dried fabricated fish chunks that can have various sizes and shapes, including chunks having many different sizes and shapes. The dried fabricated fish chunks made according to the method of the invention have a moisture content from 1 to 10%, preferably from about 2 to about 8%, more preferably from about 3 to about 7%, most preferably about 5%.

The method for making dried fabricated fish chunks of the invention comprises: creating a mixture of (1) surimi and one or more functional proteins in amounts sufficient to produce fabricated fish chunks comprising from 75 to 95% of the mixture of surimi and one or more functional proteins; wherein the mixture of surimi and functional proteins comprises from 50 to 100% surimi and from 0 to 50% of one or more non-surimi functional proteins; and (2) other comestible ingredients in amounts sufficient to produce fabricated fish chunks comprising from 5 to 25% other comestible ingredients; blending the mixture while increasing the temperature to from 135 to 170°C, preferably from about 140 to about 160°C, more preferably from about 145 to about 155°C; and cooling the mixture to a temperature to from 60 to 95°C, preferably from about 65 to about 80°C, more preferably from about 70 to about 75°C, to produce the fabricated fish chunk. Generally, the mixture of surimi and non-surimi functional proteins, other comestible ingredients and any optional ingredients, are mixed until homogeneous before blending and heating the mixture.

In some embodiments, the method for making fabricated fish chunks comprise (1) mixing surimi in a mixer while heating it with injected steam; (2) adding non-surimi functional proteins, other comestible ingredients and any other ingredients to the mixer while continuously mixing and heating to create a dough; (3) pumping the dough into an emulsifier and heating it under pressure; and (4) cooling the dough in a heat exchanger.

The resulting fabricated fish chunks have a realistic flaked fish-like appearance and texture.

In some embodiments, the methods for making fabricated fish chunks comprise (1) creating a meat emulsion; (2) mixing surimi in a mixer while heating it with injected steam; (3) adding the meat emulsion to the mixer while continuously mixing; (4) adding non-surimi functional proteins, other comestible ingredients and any other ingredients to the mixer while continuously mixing and heating to create a dough; (3) pumping the dough into an emulsifier and heating it under pressure; and (4) cooling the dough in a heat exchanger. The resulting fabricated fish chunks have a realistic flaked fish-like appearance and texture.

In some embodiments, the dough is heated in the emulsifier at a temperature from 135 to 170°C, preferably from about 140 to about 160°C, more preferably from about 145 to about 155°C, at pressures from about 60 to about 90 psi, preferably from about 65 to about 80 psi, more preferably from about 70 to about 75 psi. In some embodiments, the heated dough is cooled in a heat exchanger using a countercurrent flow of water having a temperature range from about 15 to about 45°C, preferably from about 20 to about 35°C, more preferably from about 25 to about 30°C. In other embodiments, the heated dough is cooled in a heat exchanger with multiple cooling zones wherein the water temperature at the inlet of all zones is from about 40 to about 65°C, preferably from about 45 to about 60°C, more preferably from about 48 to about 56°C.

In some embodiments, the methods for making fabricated fish chunks comprise (1) mixing surimi in a mixer while heating it with injected steam; (2) adding non-surimi functional proteins, other comestible ingredients and any other ingredients to the mixer while continuously mixing and heating to create a dough; (3) pumping the dough into an extrusion device then depositing onto a belt/conveyor, which can then be heated via wet heat, for example using a steam oven or dome, or dry heat, for example using an impingement oven, for a predetermined residence time from about 1 to about 15 minutes, preferably from about 4 to about 6 minutes, until sufficient gelling coagulation has occurred; and (4) cooling the product sufficiently to allow subsequent size-reduction into suitable fish-like pieces.

In some embodiments, the methods for making fabricated fish chunks comprise (1) mixing surimi in a mixer while heating it with injected steam; (2) adding non-functional functional proteins, other comestible ingredients and any other ingredients to the mixer while continuously mixing and heating to create a dough; (3) pumping the dough into an extruder and heating it under pressure; and (4) cooling the dough. The resulting fabricated fish chunks have a realistic flaked fish-like appearance and texture.

In some embodiments, the methods for making fabricated fish chunks comprise (1) creating a meat emulsion; (2) mixing surimi in a mixer while heating it with injected steam; (3) adding the meat emulsion to the mixer while continuously mixing; (4) adding non-surimi functional proteins, other comestible ingredients and any other ingredients to the mixer while continuously mixing and heating to create a dough; (3) pumping the dough into an extruder and heating it under pressure; and (4) cooling the dough. The resulting fabricated fish chunks have a realistic flaked fish-like appearance and texture.

In some embodiments, the dough is heated in a extruder with a temperature from about 140 to about 165°C, preferably from about 145 to about 160°C, more preferably from about 148 to about 155°C, at pressures from about 225 to about 375 psi, preferably from about 235 to about 350 psi, more preferably from about 250 to about 320 psi. In some embodiments the heated dough is cooled using multiple cooling dies. In some embodiments the water in the first cooling zone is from about 135 to about 165°C, preferably from about 140 to about 150°C, more preferably from about 145 to about 155°C. The water in each subsequent cooling die is reduced by about 10 to about 20°C resulting in a water temperature in the final cooling die from about 25 to about 55°C, preferably from about 40 to about 50°C, more preferably from about 35 to about 45°C.

In some embodiments, the meat emulsion is made by mixing one or more ingredients selected from fish frames, poultry carcass, and poultry viscera. Optionally, fish oil, cellulose, colorants, vitamins, and minerals can be added to the meat emulsion.

The invention provides a method for making dried fabricated fish chunks. The method of the invention comprises: creating a mixture of (1) one or more functional proteins in amounts sufficient to produce fabricated fish chunks comprising from 75 to 95% of the mixture of surimi and one or more functional proteins, wherein the mixture of surimi and functional proteins comprises from 50 to 100% surimi and from 0 to 50% of one or more non-surimi functional proteins; and (2) other comestible ingredients in amounts sufficient to produce fabricated fish chunks comprising from 5 to 25% other comestible ingredients; blending the mixture while increasing the temperature to from 135 to 170°C; cooling the mixture to a temperature to from 60 to 95°C to produce the fabricated fish chunks; and drying the fabricated fish chunks at a temperature from 90 to 275°C, preferably from about 150 to about 235°C, more preferably from about 160 to about 190°C; and for a time period from 10 to 50 minutes, more preferably from about 20 to about 40 minutes, more preferably from about 25 to about 35 minutes.

In one embodiment, the fabricated fish chunks are formulated to provide complete and balanced nutrition for an animal, preferably a companion animal, according to standards established by the Association of American Feed Control Officials (AAFCO). In other embodiments, the fabricated fish chunks are formulated as a snack, treat, toy, chew, or similar composition. In preferred embodiments, the fabricated fish chunks are formulated for felines, particularly as a complete and balanced food.

In another aspect, the method of the invention provides products made according to the method of the invention.

The dried fabricated fish chunks made according to the method of the invention can be used to provide blended food compositions comprising (1) dried fabricated fish chunks having a moisture content from 1 to 10%, preferably from about 2 to about 8%, more preferably from about 3 to about 7%, most preferably about 5%, and comprising from 75 to 95% of a mixture of surimi and one or more functional proteins and from 5 to 25% other comestible ingredients, wherein the mixture of surimi and functional proteins comprise from 50 to 100% surimi and from 0 to 50% of one or more non-surimi functional proteins and (2) one or more other comestible ingredients or compositions. The comestible ingredient or composition can be any comestible ingredient or composition compatible with the dried fabricated fish chunks. Preferably, the comestible composition is one or more dry kibbles suitable for consumption by companion animals, preferably dogs and cats. Preferably the comestible ingredient or composition is selected from the group consisting of extruded kibbles, baked kibbles, extruded treats, and baked treats.

In some alternatives, the comestible ingredients or compositions have a moisture content of about 12% or less and an Aw of about 0.65 or less.

In other alternatives, the comestible ingredient or composition is a wet pet food or an intermediate moisture pet food. Such foods are known to skilled artisans.

The blended food compositions comprise any suitable amount of the dried fabricated fish pieces made according to the method of the invention. Generally, the dried fabricated fish pieces comprise from about 1 to about 99% for the blended food composition, preferably from about 5 to about 99%, more preferably from about 5 to about 95%. The blended food compositions have enhanced palatability for animals that prefer the taste of fish compared to food compositions comprising the comestible food ingredients or compositions alone.

In one alternative, the blended food compositions are formulated to provide "complete and balanced" nutrition for an animal, preferably a companion animal, according to standards established by the Association of American Feed Control Officials (AAFCO). In another alternative, the food composition is a pet food composition.

In various alternatives, the animal is a companion animal, preferably a dog or a cat, more preferably a cat.

In various alternatives, the food compositions contain one or more probiotics. In other alternatives, the food compositions contain (1) one or more killed or inactivated probiotics, (2) components of the killed or inactivated probiotics that promote health benefits similar to or the same as the live probiotics, or (3) combinations thereof. The probiotics or their components can be integrated into the food compositions (e.g., uniformly or non-uniformly distributed in the composition) or applied to the food compositions (e.g., topically applied with or without a carrier). In one embodiment, the probiotics are encapsulated in a carrier. Typical probiotics include, but are not limited to, probiotic strains selected from *Lactobacilli, Bifidobacteria,* or *Enterococci,* e.g., *Lactobacillus reuteii, Lactobacillus acidophilus, Lactobacillus animalis, Lactobacillus ruminis, Lactobacillus johnsonii, Lactobacillus casei, Lactobacillus paracasei, Lactobacillus rhamnosus, Lactobacillus fermentum,* and *Bifidobacterium sp., Enterococcus faecium* and *Enterococcus sp.* In some embodiments, the probiotic strain is selected from the group consisting of *Lactobacillus reuteri* (CC2581; CNCM 1-2448), *Lactobacillus reuteri* (NCC2592; CNCM 1-2450), *Lactobacillus rhamnosus* (NCC2583; CNCM I-2449), *Lactobacillus reuteri* (NCC2603; CNCM 1-2451), *Lactobacillus reuteri* (NCC2613; CNCM I-2452), *Lactobacillus acidophilus* (NCC2628; CNCM 1-2453), *Bifidobacterium adolescentis* (e.g., NCC2627), *Bifidobacterium sp.* NCC2657 or *Enterococcus faecium* SF68 (NCIMB 10415). The food compositions contain probiotics in amounts sufficient to supply from about 10⁴ to about 10¹² cfu/animal/day, preferably from 10⁵ to about 10" cfu/animal/day, more preferably from 10⁷ to 10¹⁰ cfu/animal/day. When the probiotics are killed or inactivated, the amount of killed or inactivated probiotics or their components should produce a similar beneficial effect as the live microorganisms. Many such probiotics and their benefits are known to skilled artisans, e.g., EP1213970B1, EP1143806B1, US7189390, EP1482811B1, EP1296565B1, and US6929793. In a preferred alternative, the probiotic is *Enterococcus faecium* SF68 (NCIMB 10415).

In various alternatives, the food compositions contain one or more prebiotics, e.g. , fructo-oligosaccharides, gluco-oligosaccharides, galacto-oligosaccharides, isomalto-oligosaccharides, xylo-oligosaccharides, soybean oligosaccharides, lactosucrose, lactulose, and isomaltulose. In one alternative, the prebiotic is chicory root, chicory root extract, inulin, jerusalem artichoke, or combinations thereof. Generally, prebiotics are administered in amounts sufficient to positively stimulate the healthy microflora in the gut and cause these "good" bacteria to reproduce. Typical amounts are from about one to about 10 grams per serving or from about 5% to about 40% of the recommended daily dietary fiber for an animal. The probiotics and prebiotics can be made part of the composition by any suitable means. Generally, the agents are mixed with the composition or applied to the surface of the composition, e.g., by sprinkling or spraying. When the agents are part of a kit, the agents can be admixed with other materials or in their own package. Typically, the food composition contains from about 0.2 to about 10% prebiotic, preferably from about 0.3 to about 7%, more preferably from about 0.5 to 5%, on a dry matter basis.

In various alternatives, the food compositions contain a combination of one or more probiotics and one or more prebiotics.

In certain embodiments, the fabricated fish chunks further comprise colorants that modify the color of the fabricated fish chunks. In some embodiments, the colorants alter the color of the fabricated fish chunks by making the fabricated fish chunks lighter in color, particularly mimicking the white color of many real fish or surimi. In others, the colorants alter the color of the fabricated fish chunks by making the fabricated fish chunks mimic the color of a particular fish, e.g., salmon (pinkish orange) or tuna (redish). Colorants include, but are not limited to, compounds such as titanium dioxide or iron oxides; sodium caseinate, natural colorants such as annatto, cochineal, paprika, beet powder, saffron, grape skin extract, turmeric and carotenoids; colorants approved by the Federal Food, Drug & Cosmetic (FD&C) Act (FD&C Colorants) for use in food products; or combinations thereof. The amount for a particular colorant will vary depending on the colorant selected. Selection of such amounts is within the scope of a skilled artisan.

In various embodiments, the fabricated fish chunks comprise additional ingredients such as vitamins, minerals, amino acids, nucleic acids, fillers, palatability enhancers, binding agents, flavors, stabilizers, emulsifiers, sweeteners, colorants, buffers, salts, coatings, condiments, preservatives, prebiotics, probiotics, drugs, medicaments, medications, and the like known to skilled artisans. Non-limiting examples of supplementary minerals include calcium, phosphorous, potassium, sodium, iron, chloride, boron, copper, zinc, magnesium, manganese, iodine, selenium, and the like. Non-limiting examples of supplementary vitamins include vitamin A, any of the B vitamins, vitamin C, vitamin D, vitamin E, and vitamin K, including various salts, esters, or other derivatives of the foregoing. Additional dietary supplements may also be included, for example, any form of niacin, pantothenic acid, inulin, folic acid, biotin, amino acids, and the like, as well as salts and derivatives thereof. Stabilizers include substances that tend to increase the shelf life of the composition such as preservatives, synergists and sequestrants, packaging gases, emulsifiers, thickeners, gelling agents, and humectants. Examples of emulsifiers and/or thickening agents include gelatin, cellulose ethers, starch, starch esters, starch ethers, and modified starches. Selection of the ingredients and their amounts is known to skilled artisans. Specific amounts for each additional ingredient will depend on a variety of factors such as the ingredient included in the composition; the species of animal; the animal's age, body weight, general health, sex, and diet; the animal's consumption rate; the purpose for which the food composition is being administered to the animal; and the like. Therefore, the component and ingredient amounts may vary widely and may deviate from the preferred proportions described herein.

The dried fabricated fish chunks made according to the method of the invention can also be used to provide kits suitable for administering the dried fabricated fish chunks to an animal. The kits comprise in separate containers in a single package or in separate containers in a virtual package, as appropriate for the kit component, dried fabricated fish chunks having a moisture content from 1 to 10%, preferably from about 2 to about 8%, more preferably from about 3 to about 7%, most preferably about 5%, and comprising from 75 to 95% of a mixture of surimi and one or more functional proteins and from 5 to 25% other comestible ingredients, wherein the mixture of surimi and functional proteins comprises from 50 to 100% surimi and from 0 to 50% of one or more non-surimi functional proteins and one or more of (1) one or more comestible ingredients or compositions suitable for consumption by an animal; (2) instructions for how to combine the food composition with the comestible ingredients or compositions, particularly to produce a blended food composition; (3) one or more probiotics; (4) one or more devices for mixing kit components or containing the admixture; and (5) instructions for how to use food compositions and other kit components; particularly to enhance the palatability of comestible ingredients or compositions, to promote gastrointestinal health using the probiotics, or to use the devices to prepare and serve the food compositions. In one alternative, the food composition in the kit further comprises one or more other comestible ingredients or compositions suitable to from a blended food composition as described herein.

When the kit comprises a virtual package, the kit is limited to instructions in a virtual environment in combination with one or more physical kit components. The kit contains food compositions and other components. Typically, the food compositions and the other suitable kit components (e.g., comestible ingredients) are admixed just prior to consumption by an animal. The kits may contain the kit components in any of various combinations and/or mixtures. In one embodiment, the kit contains a container comprising a food composition and a container comprising one or more other comestible ingredients or compositions, e.g., pet food kibbles. The kit may contain additional items such as a device for mixing kit components or a device for containing the admixture, e.g., a spoon and/or a food bowl. In another alternative, the food compositions are mixed with additional nutritional supplements such as vitamins and minerals that promote good health in an animal.

Also described is a means for communicating information about or instructions for one or more of (1) using dried fabricated fish chunks having a moisture content from 1 to 10%, preferably from about 2 to about 8%, more preferably from about 3 to about 7%, most preferably about 5%, and comprising from 75 to 95% of a mixture of surimi and one or more functional proteins and from 5 to 25% other comestible ingredients, wherein the mixture of surimi and functional proteins comprises from 50 to 100% surimi, and from 0 to 50% of one or more non-surimi functional proteins as a substitute for real fish; (2) providing information about the dried fabricated fish chunk; and (3) administering the dried fabricated fish chunk to an animal, the means comprising a document, digital storage media, optical storage media, audio presentation, or visual display containing the information or instructions.

In one alternative, the means for communicating are selected from the group consisting of a displayed website, a visual display kiosk, a brochure, a product label, a package insert, an advertisement, a handout, a public announcement, an audiotape, a videotape, a DVD, a CD-ROM, a computer readable chip, a computer readable card, a computer readable disk, a USB device, a Fire Wire device, a computer memory, and any combination thereof.

Also described is a package comprising a material suitable for containing dried fabricated fish chunks having a moisture content from 1 to 10%, preferably from about 2 to about 8%, more preferably from about 3 to about 7%, most preferably about 5%, and comprising from 75 to 95% of a mixture of surimi and functional proteins and from 5 to 25% other comestible ingredients, wherein the mixture of surimi and functional proteins comprises from 50 to 100% surimi, and from 0 to 50% of one or more non-surimi functional proteins and a label affixed to the package containing a word or works, picture, design, acronym. Slogan, phrase, or other device, or combinations thereof, that indicates that the contents of the package contain dried fabricated fish chunks.

In one alternative, the package further comprises a word or words, picture, design, acronym, slogan, phrase, or other design, or combination thereof, that indicates the dried fabricated fish chunk has one or more of (1) an appealing fish-like appearance, (2) an appealing fish-like texture, (3) a nutrient profile that is the same as or similar to real fish, and (4) a formulation that provides "complete and balanced" nutrition for an animal.

In one alternative, the package further comprises a window that permits the dried fabricated fish chunks to be viewed. In another embodiment, the window is a transparent portion of the packaging material.

### EXAMPLES

The invention can be further illustrated by the following examples, although it will be understood that the examples are included merely for purposes of illustration and are not intended to limit the scope of the invention unless otherwise specifically indicated.

### Production Example 1

408.23 kg of fabricated fish chunks were made based upon the formulation shown in Table 1. A frozen surimi block was run though a grinder with 0.25 inch plate. The ground surimi was mixed in a blender while steam was injected until the surimi temperature reached 15°C. Once the surimi reached 15°C, and with continuous mixing, the other ingredients were added and mixed for an additional 5-6 minutes to form a dough. The dough had a moisture content of 64.82% which was measured using a CEM SMART trac™ (CEM Corp., Matthews, N.C.) fat and moisture analyzer. The dough was pumped using a stuffer at 13.61 kg min into an emulsifier. The pressure at the discharge end of the emulsifier was controlled with a high pressure pump within a pressure range of 74-80 psi. This pressure along with the mechanical shear of the emulsifier resulted in a temperature increase of the emulsified dough to a range of 149-153°C. The emulsified dough was then cooled to less than 100°C in a heat exchanger using a countercurrent flow of water. The water temperature at the inlet of the heat exchanger was in the range of 25-30°C and it exited the heat exchanger at a temperature range of 55-60°C. The cooled product exited the heat exchanger in large slabs approximately 8-10 inches long exhibiting a smooth laminar appearance. The resulting fabricated fish chunks had a smooth laminar appearance and a translucent color.

**Table 1**

| Ingredient | Weight (kg) | % |
|---|---|---|
| Surimi, Pollock Grade AA | 338.83 | 83.00% |
| Salt Non Iodized | 4.08 | 1.00% |
| Wheat Gluten Vital | 30.62 | 7.50% |
| Fish Oil | 28.58 | 7.00% |
| Cellulose Solka-Floc® LD | 6.12 | 1.50% |
| Total | 408.23 | 100.00% |

### Production Example 2

408.23 kg of fabricated fish chunks were made based upon the formulation shown in Table 2 according to the method of Production Example 1. The dough had a moisture content of 65.15% which was measured using a CEM SMART trac™ (CEM Corp., Matthews, N.C.) fat and moisture analyzer. The resulting fabricated fish chunks had a smooth laminar appearance and had a translucent appearance and brightness factor which was even more pronounced than Production Example 1.

**Table 2**

| Ingredient | Weight (kg) | % |
|---|---|---|
| Surimi, Pollock Grade AA | 342.92 | 84.00% |
| Salt Non Iodized | 4.08 | 1.00% |
| Fish Oil | 30.62 | 7.50% |
| Cellulose Solka-Floc® LD | 26.53 | 6.50% |
| Tricalcium Phosphate | 4.08 | 1.00% |
| Total | 408.23 | 100.00% |

### Production Example 3

400 kg of fabricated fish chunks were made based upon the formulation shown in Table 3. A frozen surimi block was run though a grinder with 13 mm plate. The ground surimi was mixed in a mixer while steam was injected until the surimi reached a minimum temperature of 2°C. Once the surimi reached a minimum temperature of 2°C, and with continuous mixing, the other ingredients were added. Steam injection was stopped once a temperature in the range of 8-20°C was achieved. Total mix time was 10-13 minutes. The dough had a moisture content of 65-66% which was measured using a CEM SMART trac™ fat and moisture analyzer. The dough was pumped using a sniffer at 680-690 kg hr into an emulsifier. The pressure at the discharge end of the emulsifier was controlled with a high pressure pump within a pressure range of 71-88 psi. This pressure along with the mechanical shear of the emulsifier resulted in a temperature increase of the emulsified dough to a range of 149-155°C. The emulsified dough was then cooled to less than 100°C in a heat exchanger with four cooling zones. The water temperature at the inlet of the heat exchanger for all four zones was in the range of 52-56°C. The exit temperature for the water in cooling zone 1 was 79-91°C. The exit temperature of the water in cooling zone 2 was 66-75°C. The exit temperature of the water in cooling zone 3 was 63-70°C. The exit temperature of the water in cooling zone 4 was 56-60°C. The cooled product exited the heat exchanger with a temperature range of 74-95°C in large slabs approximately 8-10 inches long exhibiting a smooth laminar appearance. The resulting fabricated fish chunks had a smooth laminar appearance and a translucent color.

**Table 3**

| Ingredient | Weight (kg) | % |
|---|---|---|
| Surimi, Pollock Grade AA | 358.4 | 89.60% |
| Salt Non Iodized | 3.6 | 0.90% |
| Dried Egg While | 4.36 | 1.09% |
| Milk Protein Concentrate | 15.32 | 3.83% |
| Sodium Caseinate | 2.4 | 0.60% |
| Fish Oil | 15.92 | 3.98% |
| Total | 400 | 100.00% |

### Production Example 4

400 kg of fabricated fish chunks were made based upon the formulation shown in Table 4. First, a meat emulsion was made using frozen fish frames (38.8 kg), frozen poultry carcass and viscera (147.78 kg), fish oil (6.01 kg), vitamin & minerals (1.85 kg), sodium nitrite (1.55 kg), cellulose Solka Floe® LD (International Fiber Corp., North Tonawanda, N.Y.) (1.51 kg), titanium dioxide (1.56 kg), and sodium tripolyphosphate (0.93 kg). The frozen fish and poultry were ground using a grinder with a 12 mm plate. The ground meats were then mixed with the other ingredients in a mixer for 3 minutes. The mixture was then pumped through an emulsifier. The meat emulsion had a final temperature range of 10-15°C.

A frozen surimi block was run though a grinder with 12 mm plate. The ground surimi was mixed in a mixer while steam was injected until the surimi reached a minimum temperature of 2°C. Once the surimi reached a minimum temperature of 2°C, and with continuous mixing, 101.87 kg of the meat emulsion was added. After mixing for 1-2 minutes the other ingredients were added. Steam injection was stopped once a temperature in the range of 8-20°C was achieved. Total mix time was 10-13 minutes. The dough had a moisture content of 62-64% which was measured using a CEM SMART trac™ fat and moisture analyzer. The dough was pumped using a stuffer at 625-635 kg/hr into an emulsifier. The pressure at the discharge end of the emulsifier was controlled with a high pressure pump within a pressure range of 70-80 psi. This pressure along with the mechanical shear of the emulsifier resulted in a temperature increase of the emulsified dough to a range of 149 -155°C. The emulsified dough was then cooled to less than 100°C in a heat exchanger with four cooling zones. The water temperature at the inlet for all four zones was in the range of 48-52°C. The exit temperature for the water in cooling zone 1 was 65-75°C. The exit temperature of the water in cooling zone 2 was 60-70°C. The exit temperature of the water in cooling zone 3 was 55-65°C. The exit temperature of the water in cooling zone 4 was 55- 60°C. The cooled product exited the heat exchanger with a temperature range of 70-95°C in large slabs approximately 8-10 inches long exhibiting a smooth laminar appearance. The resulting fabricated fish chunks had a smooth laminar appearance and a translucent color.

**Table 4**

| Ingredient | Weight (kg) | % |
|---|---|---|
| Surimi Pollock Grade AA | 179.19 | 44.7975% |
| Frozen Fish Frames | 19.76 | 4.9400% |
| Frozen Poultry Carcass and Viscera | 75.28 | 18.8200% |
| Vitamin & Minerals | 0.94 | 0.2350% |
| Sodium Nitrite | 0.79 | 0.1975% |
| Cellulose Solka-Floc® LD | 0.77 | 0.1925% |
| Titanium Dioxide | 0.80 | 0.2000% |
| Sodium Tripolyphosphate | 0.48 | 0.1200% |
| Salt | 1.80 | 0.45000% |
| Egg White | 2.99 | 0.7475% |
| Soy Protein Isolate | 7.66 | 1.9150% |
| Milk Protein Concentrate | 7.66 | 1.9150% |
| Sodium Caseinate | 1.20 | 0.3000% |
| Fish Oil | 11.02 | 2.7550% |
| Wheat Gluten Vital | 34.00 | 8.5000% |
| Water | 55.66 | 13.9150% |
| Total | 400.00 | 100.000% |

### Production Example 5

200 kg of fabricated fish chunk s were made based upon the formulation shown in Table 5.

First, a meat emulsion was made using frozen fish frame (38.8 kg), frozen poultry carcass and viscera (147.78 kg), fish oil (6.01 kg), vitamin & minerals (1.85 kg), sodium nitrite (1.55 kg), cellulose Solka-Floc® LD (1.51 kg), titanium dioxide (1.56 kg), and sodium tripolyphosphate (0.93 kg). The frozen fish and poultry were ground using a grinder with a 12 mm plate. The ground meats were then mixed with the other ingredients in a mixer for 3 minutes. This mixture was then pumped through an emulsifier. The meat emulsion had a final temperature range of 10-15°C.

A frozen surimi block was run though a grinder with 12 mm plate. The ground surimi was mixed in a mixer while steam was injected until the surimi reached a minimum temperature of 2°C. Once the surimi reached a minimum temperature of 2°C, and with continuous mixing, 25.47 kg of the meat emulsion was added. After mixing for 1-2 minutes the other ingredients were added. Steam injection was stopped once a temperature in the range of 8-20°C was achieved. Total mix time was 10-13 minutes. The dough had a moisture content of 63-65% as measured using a CEM SMART trac™ fat and moisture analyzer. The dough was pumped using a stuffer at 645-655 kg/hr into an emulsifier. The pressure at the discharge end of the emulsifier was controlled with a high pressure pump within a pressure range of 70-80 psi. This pressure along with the mechanical shear of the emulsifier resulted in a temperature increase of the emulsified dough to a range of 149 -155°C. The emulsified dough was then cooled to less than 100°C in a heat exchanger with four cooling zones. The water temperature at the inlet for all four zones was in the range of 48-52°C. The exit temperature for the water in cooling zone 1 was 80-90°C. The exit temperature of the water in cooling zone 2 was 60-70°C. The exit temperature of the water in cooling zone 3 was 50-60°C. The exit temperature of the water in cooling zone 4 was 50- 65°C. The cooled product exited the heat exchanger with a temperature range of 55-70°C in large slabs approximately 8-10 inches long exhibiting a smooth laminar appearance. The resulting fabricated fish chunks had a smooth laminar appearance and a translucent color.

**Table 5**

| Ingredient | Weight (kg) | % |
|---|---|---|
| Surimi Pollock Grade AA | 134.40 | 67.200% |
| Frozen Fish Frame | 4.94 | 2.470% |
| Frozen Poultry Carcass | 18.82 | 9.410% |
| Vitamin & Minerals | 0.24 | 0.120% |
| Sodium Nitrile | 0.20 | 0.100% |
| Cellulose Solka-Floc® LD | 0.19 | 0.095% |
| Titanium Dioxide | 0.20 | 0.100% |
| Sodium Tripolyphosphate | 0.12 | 0.060% |
| Salt | 1.35 | 0.675% |
| Egg White | 1.84 | 0.920% |
| Soy Protein Isolate | 1.91 | 0.955% |
| Milk Protein Concentrate | 5.74 | 2.870% |
| Sodium Caseinate | 0.90 | 0.450% |
| Fish Oil | 6.74 | 3.370% |
| Wheat Gluten Vital | 8.50 | 4.250% |
| Water | 13.91 | 6.955% |
| Total | 200.00 | 100.000% |

### Production Example 6

200 kg of fabricated fish chunks were made based upon the formulation shown in Table 6. A frozen surimi block was run though a grinder with 12 mm plate. The ground surimi was mixed in a mixer while steam was injected until the surimi reached a minimum temperature of 2°C. Once the surimi reached a minimum temperature of 2°C, and with continuous mixing, the other ingredients were added. Steam injection was stopped once a temperature in the range of 5-6°C was achieved. Total mix time was 10-13 minutes. The dough had a moisture content of 65-68 % which was measured using a CEM SMART trac™ fat and moisture analyzer. The dough was pumped at 100 kg/hr into a twin screw extruder. The speed was adjusted so that the dough attained a temperature range of 148-155°C and a pressure range of 250-320 psi in the barrel. The product was then cooled to less than 100°C using a series of 7 cooling dies. The cooling water in the first cooling die was 145-155°C. The temperature of cooling water in each zone was reduced by 10-20°C, resulting in a temperature of 35- 45°C in the final zone. The cooled product exited the extruder in a continuous rope with smooth laminar appearance and a translucent color. The resulting fabricated fish chunks had a smooth laminar appearance and a translucent color.

**Table 6**

| Ingredient | Weight (kg) | % |
|---|---|---|
| Surimi Pollack Grade AA | 179.2 | 89.60% |
| Salt | 1.8 | 0.90% |
| Egg White | 2.18 | 1.09% |
| Milk Protein Concentrate | 7.66 | 3.83% |
| Sodium Caseinate | 1.2 | 0.60% |
| Fish Oil | 7.96 | 3.98% |
| Total | 200 | 100.00% |

### Production Example 7

100 kg of fabricated fish chunks were made based upon the formulation shown in Table 7. First, a meat emulsion was made using frozen fish frame (23.28 kg), frozen poultry carcass and viscera(88.67 kg), fish oil (3.61 kg), vitamin & minerals (1.11 kg), sodium nitrite (0.93 kg), cellulose Solka-Floc® LD (0.91 kg), titanium dioxide (0.9 kg), sodium tripolyphosphate (0.56 kg), red iron oxide (0.03 kg), and beta carotene 10% CWS (0.01 kg). The frozen fish and poultry were ground using a grinder with a 12 mm plate. The ground meats were then mixed with the other ingredients in a mixer for 3 minutes. This mixture was then pumped through an emulsifier. The meat emulsion had a final temperature range of 10-15°C.

A frozen surimi block was run though a grinder with 12 mm plate. The ground surimi was mixed in a mixer while steam was injected until the surimi reached a minimum temperature of 2°C. Once the surimi reached a minimum temperature of 2°C, and with continuous mixing, 12.75 kg of the meat emulsion was added. After mixing for 1-2 minutes the other ingredients were added. Steam injection was stopped once a temperature in the range of 8-20°C was achieved. Total mix time was 10-13 minutes. The dough had a moisture content of 65-66% which was measured using a CEM SMART trac™ fat and moisture analyzer. The dough was pumped at 100 kg hr into a twin screw extruder. The extruder produced a temperature range of 148-155°C and a pressure range of 250-320 psi. The product was then cooled to less than 100°C using a series of 7 cooling dies. The cooling water in the first cooling die was 145-155°C. The temperature of cooling water in each zone was reduced by 10-20°C, resulting in a temperature range of 35-45°C in the final zone. The product exited the extruder in a continuous rope with smooth, short laminar fibers and a translucent white color. The resulting fabricated fish chunks had a smooth laminar appearance and a translucent color.

**Table 7**

| Ingredient | Weight (kg) | % |
|---|---|---|
| Surimi Pollock Grade AA | 67.17 | 67.17% |
| Frozen Fish Frame | 2.48 | 2.48% |
| Frozen Poultry Carcass and Viscera | 9.41 | 9.41% |
| Vitamin & Minerals | 0.12 | 0.12% |
| Sodium Nitrite | 0.10 | 0.10% |
| Cellulose Solka-Floc® LD | 0.10 | 0.10% |
| Titanium Dioxide | 0.10 | 0.10% |
| Sodium Tripolyphosphate | 0.06 | 0.06% |
| Salt | 0.68 | 0.68% |
| Egg White | 0.92 | 0.92% |
| Soy Protein Isolate | 0.96 | 0.96% |
| Milk Protein Concentrate | 2.87 | 2.87% |
| Sodium Caseinate | 0.45 | 0.45% |
| Fish Oil | 3.37 | 3.37% |
| Wheat Gluten Vital | 4,25 | 4.25% |
| Water | 6.96 | 6.96% |
| Total | 100.00 | 100.00% |

### Production Example 8

100 kg of fabricated fish chunks were made based upon the formulation shown in Table 8. First, a meat emulsion was made using frozen fish frame (23.28 kg), frozen poultry carcass and viscera (88.67 kg), fish oil (3.61 kg), vitamin & minerals (1.11 kg), sodium nitrite (0.93 kg), cellulose Solka-Floc® LD (0.91 kg), titanium dioxide (0.90 kg), sodium tripolyphosphate (0.56 kg), red iron oxide (0.03 kg), and beta carotene 10% CWS (0.003 kg). The frozen fish and poultry were ground using a grinder with a 12 mm plate. The ground meats were then mixed with the other ingredients in a mixer for 3 minutes. This mixture was then pumped through an emulsifier. The meat emulsion had a final temperature range of 10-15°C.

A frozen surimi block was run though a grinder with 12 mm plate. The ground surimi was mixed in a mixer while steam was injected until the surimi reached a minimum temperature of 2°C. Once the surimi reached a minimum temperature of 2°C, and with continuous mixing, 25.47 kg of the meat emulsion was added. After mixing for 1-2 minutes the other ingredients were added. Steam injection was stopped once a temperature in the range of 8-20°C was achieved. Total mix time was 10-13 minutes. The dough had a moisture content of 65-66% which was measured using a CEM SMART trac™ fat and moisture analyzer. The dough was pumped at 100 kg hr into a twin screw extruder. The extruder produced a temperature range of 148-155°C and a pressure range of 250-320 psi. The product was then cooled to less than 100°C using a series of 7 cooling dies. The cooling water in the first cooling die was 145-155°C. The temperature of cooling water in each zone was reduced by 10-20°C, resulting in a temperature range of 35-45°C in the final zone. The product exited the extruder in a continuous rope with smooth, short laminar fibers and a translucent white color. The resulting fabricated fish chunks had a smooth laminar appearance and a translucent color.

**Table 8**

| Igredient | Weight (kg) | % |
|---|---|---|
| Surimi Pollock Grade AA | 44.78 | 44.78% |
| Frozen Fish Frame | 4.94 | 4.94% |
| Frozen Poultry Carcass and Viscera | 18.82 | 18.82% |
| Vitamin & Minerals | 0.24 | 0.24% |
| Sodium Nitrite | 0.20 | 0.20% |
| Cellulose Solka-Floc® LD | 0.19 | 0.19% |
| Titanium Dioxide | 0.19 | 0.19% |
| Sodium Tripolyphosphate | 0.12 | 0.12% |
| Red Iron Oxide | 0.01 | 0.01% |
| Salt | 0.45 | 0.45% |
| Egg White | 0.75 | 0.75% |
| Soy Protein Isolate | 1.91 | 1.91% |
| Milk Protein Concentrate | 1.92 | 1.92% |
| Sodium Caseinate | 0.30 | 0.30% |
| Fish Oil | 2.76 | 2.76% |
| Wheat Gluten Vital | 8.50 | 8.50% |
| Water | 13.92 | 13.92% |
| Total | 100.00 | 100.00% |

### Example 1

23 kg of fabricated fish chunks made according to Production Example 3 were diced with an M-dicer (45 Hz-1/4 inch) and then a DCC-dicer (0.120 inch). 4.5 kg of diced fabricated fish chunks were selected and dried at 177°C in an oven for 30 minutes.

## Claims

1. A method for making dried fabricated fish chunks comprising:
creating a mixture of (1) surimi and one or more functional proteins in amounts sufficient to produce fabricated fish chunks comprising from 75 to 95% by weight of the mixture of surimi and functional proteins, wherein the mixture of surimi and functional proteins comprises from 50 to 100% by weight surimi and from 0 to 50% by weight of one or more non-surimi functional proteins selected from egg white protein, milk protein concentrate, wheat gluten, soy isolate protein, non-surimi fish protein, other types of white or light colored meat protein, and combinations thereof; and (2) other comestible ingredients in amounts sufficient to produce fabricated fish chunks comprising from 5 to 25% by weight other comestible ingredients; wherein the other comestible ingredients are fiber, fat, carbohydrate, meal, or combinations thereof;
blending the mixture while increasing the temperature to from 135 to 170°C; and
cooling the mixture to a temperature to from 60 to 95°C to produce the fabricated fish chunks;
further comprising drying the fabricated fish chunks at a temperature from 90 to 275°C and for a time period from 10 to 50 minutes, preferably wherein the fabricated fish chunks are dried at a temperature from 150 to 235°C, more preferred wherein the fabricated fish chunks are dried at a temperature from 160 to 190°C;
wherein the dried fabricated fish chunk is a dried fabricated fish piece having a moisture content from 1 to 10% by weight.

2. The method of claim 1 wherein the mixture is blended while the temperature is increased to from 140 to 160°C,
preferably wherein the mixture is blended while the temperature is increased to from 145 to 155°C.

3. The method of claim 1 wherein the mixture is cooled to a temperature to from 65 to 8o°C, preferably wherein the mixture is cooled to a temperature to from 70 to 75°C.

4. The method of claim 1 wherein the fabricated fish chunks are dried for a time period from 20 to 40 minutes preferably wherein the fabricated fish chunks are dried for a time period from 25 to 35 minutes.

## Patentansprüche

1. Verfahren zum Herstellen von getrockneten industriell gefertigten Fischstücken, umfassend:
Erzeugen einer Mischung aus (1) Surimi und einem oder mehreren funktionellen Proteinen in Mengen, die ausreichend sind, um industriell gefertigte Fischstücke herzustellen, die zu von 75 bis 95 Gew.-% der Mischung Surimi und funktionelle Proteine umfassen, wobei die Mischung aus Surimi und funktionellen Proteinen zu von 50 bis 100 Gew.-% Surimi und zu von 0 bis 50 Gew.-% ein oder mehrere funktionelle Nicht-Surimi-Proteine umfasst, die ausgewählt sind aus Eiweißprotein, Milchproteinkonzentrat, Weizengluten, Sojaisolatprotein, Nicht-Surimi-Fischprotein, anderem weißem oder hellem Fleischprotein und Kombinationen davon; und (2) andere Nahrungsmittelbestandteile in Mengen, die ausreichend sind, um industriell gefertigte Fischstücke herzustellen, die zu von 5 bis 25 Gew.-% andere Nahrungsmittelbestandteile umfassen; wobei die anderen Nahrungsmittelbestandteile Fasern, Fett, Kohlenhydrate, Mehl oder Kombinationen davon sind;
Mischen der Mischung, während die Temperatur von 135 auf 170 °C erhöht wird; und
Abkühlen der Mischung auf eine Temperatur von 60 bis 95 °C, um die industriell gefertigten Fischstücke herzustellen;
ferner umfassend ein Trocknen der hergestellten Fischstücke bei einer Temperatur von 90 bis 275 °C und für einen Zeitraum von 10 bis 50 Minuten, wobei die industriell gefertigten Fischstücke bei einer Temperatur von 150 bis 235 °C getrocknet werden, wobei die industriell gefertigten Fischstücke mehr bevorzugt bei einer Temperatur von 160 bis 190 °C getrocknet werden;
wobei das industriell gefertigte Fischstück ein getrocknetes Fischstück mit einem Feuchtegehalt von 1 bis 10 Gew.-% ist.

2. Verfahren nach Anspruch 1, wobei die Mischung gemischt wird, während die Temperatur von 140 auf 160 °C erhöht wird,
wobei die Mischung vorzugsweise gemischt wird, während die Temperatur von 145 auf 155 °C erhöht wird.

3. Verfahren nach Anspruch 1, wobei die Mischung auf eine Temperatur von 65 bis 80 °C abgekühlt wird, wobei die Mischung auf eine Temperatur von 70 bis 75 °C abgekühlt wird.

4. Verfahren nach Anspruch 1, wobei die industriell gefertigten Fischstücke für eine Zeitdauer von 20 bis 40 Minuten getrocknet werden, wobei die industriell gefertigten Fischstücke vorzugsweise für eine Zeitdauer von 25 bis 35 Minuten getrocknet werden.

## Revendications

1. Procédé de fabrication de morceaux de poisson façonnés séchés comprenant :
la création d'un mélange de (1) surimi et d'une ou plusieurs protéines fonctionnelles en des quantités suffisantes pour produire des morceaux de poisson façonnés comprenant de 75 à 95 % en poids du mélange de surimi et de protéines fonctionnelles, dans lequel le mélange de surimi et de protéines fonctionnelles comprend de 50 à 100 % en poids de surimi et de 0 à 50 % en poids d'une ou plusieurs protéines fonctionnelles non-surimi choisies parmi une protéine de blanc d'œuf, un concentré de protéines laitières, du gluten de blé, une protéine d'isolat de soja, une protéine de poisson non-surimi, d'autres types de protéine de viande blanche ou légèrement colorée, et des combinaisons de ceux-ci ; et (2) d'autres ingrédients comestibles en des quantités suffisantes pour produire des morceaux de poisson façonnés comprenant de 5 à 25 % en poids d'autres ingrédients comestibles ; dans lequel les autres ingrédients comestibles sont de la fibre, de la matière grasse, un glucide, de la farine, ou des combinaisons de ceux-ci ;
le mixage du mélange tout en augmentant la température de 135 à 170 °C ; et
le refroidissement du mélange à une température allant de 60 à 95 °C pour produire les morceaux de poisson façonnés ;
comprenant en outre le séchage des morceaux de poisson façonnés à une température allant de 90 à 275 °C et pendant une période de temps allant de 10 à 50 minutes, de préférence dans lequel les morceaux de poisson façonnés sont séchés à une température allant de 150 à 235 °C, plus préférablement dans lequel les morceaux de poisson façonnés sont séchés à une température allant de 160 à 190 °C ;
dans lequel le morceau de poisson façonné séché est une pièce de poisson façonnée séchée ayant une teneur en humidité allant de 1 à 10 % en poids.

2. Procédé selon la revendication 1 dans lequel le mélange est mixé alors que la température est augmentée de 140 à 160 °C,
de préférence dans lequel le mélange est mixé alors que la température est augmentée de 145 à 155 °C.

3. Procédé selon la revendication 1 dans lequel le mélange est refroidi à une température allant de 65 à 80 °C, de préférence dans lequel le mélange est refroidi à une température allant de 70 à 75 °C.

4. Procédé selon la revendication 1 dans lequel les morceaux de poisson façonnés sont séchés pendant une période de temps allant de 20 à 40 minutes de préférence dans lequel les morceaux de poisson façonnés sont séchés pendant une période de temps allant de 25 à 35 minutes.
